(19) Europäisches Patentamt
European Patent Office
Office européen des brevets

(11) EP 3 666 804 B1

(12) **EUROPEAN PATENT SPECIFICATION**

(45) Date of publication and mention of the grant of the patent:
**05.04.2023 Bulletin 2023/14**

(21) Application number: **18212641.7**

(22) Date of filing: **14.12.2018**

(51) International Patent Classification (IPC):
***C08F 210/06*** *(2006.01)* ***C08F 2/00*** *(2006.01)*
***C08L 23/14*** *(2006.01)* ***B32B 27/32*** *(2006.01)*
***B32B 27/08*** *(2006.01)*

(52) Cooperative Patent Classification (CPC):
(C-Sets available)
**C08L 23/14; B32B 27/08; B32B 27/32; B32B 27/327;** B32B 2307/30; B32B 2307/412; B32B 2307/54; B32B 2439/70; B32B 2439/80; C08F 210/06; C08L 2201/10; C08L 2203/162; C08L 2205/025; C08L 2207/02; C08L 2308/00;

(Cont.)

(54) **POLYPROPYLENE COMPOSITION WITH FAVOURABLE COMBINATION OF OPTICS, SOFTNESS AND LOW SEALING**

POLYPROPYLENZUSAMMENSETZUNG MIT GÜNSTIGER KOMBINATION AUS OPTIK, WEICHHEIT UND NIEDRIGER ABDICHTUNG

COMPOSITION DE POLYPROPYLÈNE AYANT UNE COMBINAISON FAVORABLE D’OPTIQUE, DE DOUCEUR ET DE FAIBLE ÉTANCHÉITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.06.2020 Bulletin 2020/25**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**
- **GRUENBERGER, Manfred**
  **4021 Linz (AT)**
- **HUBNER, Gerhard**
  **4021 Linz (AT)**

(74) Representative: **Maiwald GmbH**
**Elisenhof**
**Elisenstraße 3**
**80335 München (DE)**

(56) References cited:
**EP-A1- 2 664 650**
**EP-A1- 3 064 548**
**WO-A1-2014/180639**
**WO-A1-2015/022127**
**WO-A1-2017/097579**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08L 2314/06

C-Sets
**C08F 210/06, C08F 2/001;**
**C08F 210/06, C08F 4/65927;**
**C08L 23/14, C08L 23/14, C08L 23/16;**
C08F 110/06, C08F 4/6492;
C08F 210/06, C08F 210/16, C08F 2500/12,
C08F 2500/17, C08F 2500/20, C08F 2500/26

## Description

The present invention relates to a polypropylene composition having a melt flow rate $MFR_2$ (230°C / 2.16 kg) measured according to ISO 1133 in the range from 1.0 to 6.0 g/10min, and a melting temperature Tm measured by differential scanning calorimetry (DSC) in the range from 120 to 145°C, a process for the preparation of such a polypropylene composition, and a corresponding film.

There is an increasing trend in the food and medical packaging industry to use polyolefin materials such as polypropylene films. For medical applications, such as for medical pouches, as well as food application, such as for food packaging, random heterophasic propylene copolymer (RAHECO) are a material of increasing interest as they combine the benefits of heterophasic propylene copolymers (HECO) and random copolymers. However, the random heterophasic propylene copolymer (RAHECO) provide limited properties especially as regards their sealing properties. Therefore, multilayer structures have been developed where a random heterophasic propylene copolymer (RAHECO) is used as core layer providing softness and toughness in combination with an inner layer made from a random copolymer having a high ethylene content which provides sealing properties. Such structures however introduce a high complexity in conversion and reuse of the materials after the intended use.

Therefore, there is still a need in the art for providing a material that combines the benefits of the random heterophasic propylene copolymer (RAHECO) such as softness, and the sealing properties of the random copolymer. Furthermore, it is desired that such a material provides good optical properties before and after sterilization. In other words, a material is desirable that provides softness, sealability in combination with good optics, especially clarity and haze to films prepared from such a material.

EP 3 064 548 A1 describes a polypropylene composition which combines low sealing initiation temperature (SIT) and high melting point (Tm), furthermore showing a broad sealing window, low hexane solubles and good optical properties, like low haze. WO 2015/022127 A1 describes a polypropylene composition comprising comonomer units derived from ethylene in an amount of from 9.0 to 52.0 mol-% and comonomer units derived from a higher a-olefin in an amount of from 0.4 to 3.0 mol-%, wherein said polypropylene composition has an amount of xylene cold solubles of at least 30 wt.-%, wherein further the xylene cold soluble fraction has an ethylene content of from 20.0 to 80.0 mol-% and a higher a-olefin content from 0.1 to 1.5 mol-%. EP 2 664 650 A1 describes a moulded article comprising a polypropylene composition, wherein the polypropylene composition comprises comonomer units derived from ethylene in an amount of from 0.5 wt% to 35 wt%, and from at least one C5-12alpha-olefin in an amount of from 1.0 mol% to 3.0 mol%, wherein the polypropylene composition has an amount of xylene solubles XS of from 20 wt% to 39 wt%, and the xylene solubles have an amount of ethylene-derived comonomer units of from 4.0 wt% to 70 wt%.

The finding of the present invention is that a polypropylene composition provides an excellent combination of softness, sealability and optical properties to films if the polypropylene compositionhas a specific combination and amount of comonomers.

Therefore, the present invention is directed to a polypropylene composition having a melt flow rate $MFR_2$ (230°C / 2.16 kg) measured according to ISO 1133 in the range from 1.0 to 6.0 g/10min, and a melting temperature Tm measured by differential scanning calorimetry (DSC) in the range from 120 to 145°C, the polypropylene composition comprising an amount of a xylene cold soluble (XCS) fraction determined according to ISO 16152 (25°C) in the range from 5.0 to 30 wt.-%, based on the total weight of the composition, the xylene cold soluble (XCS) fraction having an intrinsic viscosity (IV) determined according to DIN ISO 162/1 (in decalin at 135°C) in the range from 1.2 to 3.0 dl/g and comprising comonomer units derived from

i) ethylene in an amount from 4.0 to 50 wt.-%, based on the total weight of the xylene cold soluble (XCS) fraction, and
ii) alpha-hexene in an amount from 0.5 to 10 wt.-%, based on the total weight of the xylene cold soluble (XCS) fraction.

It has surprisingly been found out that such polypropylene composition provides an excellent combination of softness and sealability together with good optical properties before and after sterilization. The inventive polypropylene composition is applicable for the preparation of films, especially films for food and medical packaging such as medical pouches.

In one embodiment of the present invention, the polypropylene composition comprises a propylene copolymer (R-PP) in an amount from 70 to 95 wt.-%, based on the total weight of the composition.

In another embodiment of the present invention, the propylene copolymer (R-PP) has a melt flow rate $MFR_2$ (230°C / 2.16 kg) measured according to ISO 1133 in the range from 1.0 to 15 g/10min.

In one embodiment of the present invention, the propylene copolymer (R-PP) comprises a first propylene copolymer fraction (R-PP1) and a second propylene copolymer fraction (R-PP2) and the comonomer contents of the propylene copolymer (R-PP) and the first propylene copolymer fraction (R-PP1) fulfil inequation (I),

$$\frac{Co(RPP)}{Co(RPP1)} \geq 2.0 \qquad (I),$$

wherein Co(RPP) is the comonomer content of the propylene copolymer (R-PP) in wt.-% and Co(RPP1) is the comonomer content of the first propylene copolymer fraction (R-PP1) in wt.-%.

In another embodiment of the present invention, the polypropylene composition is a heterophasic propylene copolymer (HECO) comprising the propylene copolymer (R-PP) and an elastomeric copolymer (E), wherein said propylene copolymer (R-PP) comprises units derived from propylene, alpha-hexene and optionally ethylene and said elastomeric copolymer (E) is a terpolymer (T) comprising units derived from propylene, ethylene and alpha-hexene.

In yet another embodiment of the present invention, the polypropylene composition comprises a xylene cold insoluble (XCI) fraction comprising comonomer units derived from a) ethylene in an amount from 0 to 10 wt.-%, based on the total weight of the xylene cold insoluble (XCI) fraction, and b) alpha-hexene in an amount from 1.0 to 12 wt.-%, based on the total weight of the xylene cold insoluble (XCI) fraction.

In one embodiment of the present invention, the polypropylene composition does not comprise a further polymeric material different to the elastomeric copolymer (E) and the propylene copolymer (R-PP) in an amount exceeding 5.0 wt.-%, preferably exceeding 2.5 wt.-%, based on the total weight of the polypropylene composition.

In another embodiment of the present invention, the polypropylene composition is prepared in the presence of a metallocene catalyst.

In yet another embodiment of the present invention, the polypropylene composition has been produced in a multi-stage process.

In one embodiment of the present invention, the polypropylene composition has, when measured on a 50 μm cast film,

a) a clarity before and/or after sterilization as measured according to ASTM D1003-00 in the range from 95.0 to 100.0 %, preferably from 97.0 to 100.0 %, and/or
b) a haze before sterilization as measured according to ASTM D1003-00 in the range from 0.01 to 1.0 %, preferably in the range from 0.01 to 0.8 %, and/or
c) a haze after sterilization as measured according to ASTM D1003-00 in the range from 0.01 to 10.0 %, preferably in the range from 0.01 to 8.0 %, and/or
d) a tensile modulus in machine direction and/or transverse direction as measured according to ISO 527-3 at 23°C in the range from 200 to 600 MPa, preferably from 300 to 500 MPa.

Another aspect of the present invention refers to a process for the preparation of a polypropylene composition as defined herein, wherein a propylene copolymer (R-PP) is prepared in a first stage and optionally second stage and an elastomeric copolymer (E) is prepared in a further stage in the presence of the propylene copolymer (R-PP).

According to a further aspect of the present invention, a film comprising the inventive polypropylene composition is provided having, when measured on a 50 μm cast film,

a) a clarity before and/or after sterilization as measured according to ASTM D1003-00 in the range from 95.0 to 100.0 %, preferably from 97.0 to 100.0 %, and/or
b) a haze before sterilization as measured according to ASTM D1003-00 in the range from 0.01 to 1.0 %, preferably in the range from 0.01 to 0.8 %, and/or
c) a haze after sterilization as measured according to ASTM D1003-00 in the range from 0.01 to 10.0 %, preferably in the range from 0.01 to 8.0 %, and/or
d) a tensile modulus in machine direction and/or transverse direction as measured according to ISO 527-3 at 23°C in the range from 200 to 600 MPa, preferably from 300 to 500 MPa.

According to one embodiment, the film is prepared from the polypropylene composition as defined herein.

According to another embodiment, the film is a multilayer film and at least one layer comprises the polypropylene composition.

According to yet another embodiment, the film is a multilayer film having at least three layers ABC, wherein the B layer comprises the polypropylene composition.

In the following, the invention is defined in more detail.

The polypropylene composition according to the present invention especially results in films featuring softness, sealability and optical properties.

Accordingly, it is preferred that the polypropylene composition has a tensile modulus, when measured on a 50 μm cast film, in machine direction and/or transverse direction as measured according to ISO 527-3 at 23°C in the range

from 200 to 600 MPa, preferably from 300 to 500 MPa, more preferably from 300 to 448 MPa. For example, the polypropylene composition has a tensile modulus, when measured on a 50 μm cast film, in machine direction or transverse direction as measured according to ISO 527-3 at 23°C in the range from 200 to 600 MPa, preferably from 300 to 500 MPa, more preferably from 300 to 448 MPa. Preferably, the polypropylene composition has a tensile modulus, when measured on a 50 μm cast film, in machine direction and transverse direction as measured according to ISO 527-3 at 23°C in the range from 200 to 600 MPa, preferably from 300 to 500 MPa, more preferably from 300 to 448 MPa.

The polypropylene composition also provides good optical properties, especially good clarity and haze before and after sterilization to films.

It is thus appreciated that the polypropylene composition, when measured on a 50 μm cast film, preferably has a clarity before and/or after sterilization according to ASTM D1003-00 in the range from 95.0 to 100.0 %, preferably from 97.0 to 100.0 %. For example, the polypropylene composition, when measured on a 50 μm cast film, preferably has a clarity before or after sterilization as measured according to ASTM D1003-00 in the range from 95.0 to 100.0 %, preferably from 97.0 to 100.0 %. Preferably, the polypropylene composition, when measured on a 50 μm cast film, preferably has a clarity before and after sterilization as measured according to ASTM D1003-00 in the range from 95.0 to 100.0 %, preferably from 97.0 to 100.0 %.

It is further appreciated that the polypropylene composition, when measured on a 50 μm cast film, has a haze before sterilization as measured according to ASTM D1003-00 in the range from 0 to 1.0 %, preferably in the range from 0 to 0.8 %, more preferably in the range from 0.1 to 0.8 %.

Additionally or alternatively, the polypropylene composition, when measured on a 50 μm cast film, has a haze after sterilization as measured according to ASTM D1003-00 in the range from 0 to 10.0 %, preferably in the range from 0 to 8.0 %, more preferably in the range from 1.0 to 8.0 %.

In one embodiment, the polypropylene composition, when measured on a 50 μm cast film, thus has

a) a clarity before and/or after sterilization as measured according to ASTM D1003-00 in the range from 95.0 to 100.0 %, preferably from 97.0 to 100.0 %, and/or
b) a haze before sterilization as measured according to ASTM D1003-00 in the range from 0.01 to 1.0 %, preferably in the range from 0.01 to 0.8 %, more preferably in the range from 0.1 to 0.8 %, and/or
c) a haze after sterilization as measured according to ASTM D1003-00 in the range from 0.01 to 10.0 %, preferably in the range from 0.01 to 8.0 %, more preferably in the range from 1.0 to 8.0 %, and/or
d) a tensile modulus in machine direction and/or transverse direction as measured according to ISO 527-3 at 23°C in the range from 200 to 600 MPa, preferably from 300 to 500 MPa, more preferably from 300 to 448 MPa.

For example, the polypropylene composition, when measured on a 50 μm cast film, has

a) a clarity before and/or after sterilization as measured according to ASTM D1003-00 in the range from 95.0 to 100.0 %, preferably from 97.0 to 100.0 %, and
b) a haze before sterilization as measured according to ASTM D1003-00 in the range from 0.01 to 1.0 %, preferably in the range from 0.01 to 0.8 %, more preferably in the range from 0.1 to 0.8 %, and
c) a haze after sterilization as measured according to ASTM D1003-00 in the range from 0.01 to 10.0 %, preferably in the range from 0.01 to 8.0 %, more preferably in the range from 1.0 to 8.0 %, and
d) a tensile modulus in machine direction and/or transverse direction as measured according to ISO 527-3 at 23°C in the range from 200 to 600 MPa, preferably from 300 to 500 MPa, more preferably from 300 to 448 MPa.

Furthermore, the inventive polypropylene composition features a good sealability. Therefore, the inventive polypropylene composition preferably has a sealing initiation temperature (SIT) as determined by a method described in the example section herein in the range from 90 to 110°C, preferably from 96 to 108°C.

Such combination of softness, sealability and optical properties in films is achieved by a specific polypropylene composition. That is to say, the polypropylene composition must fulfil specific requirements.

It is especially required that the polypropylene composition has a melt flow rate $MFR_2$ (230°C / 2.16 kg) measured according to ISO 1133 in the range from 1.0 to 6.0 g/10min. For example, the polypropylene composition has a melt flow rate $MFR_2$ (230°C / 2.16 kg) measured according to ISO 1133 in the range from 1.0 to 4.0 g/10min.

Additionally, the polypropylene composition must have a melting temperature Tm measured by differential scanning calorimetry (DSC) in the range from 120 to 145°C. For example, the polypropylene composition has a melting temperature Tm measured by differential scanning calorimetry (DSC) in the range from 122 to 142°C, preferably from 124 to 140°C, and most preferably from 126 to 138°C.

It is further appreciated that the polypropylene composition comprises a specific amount of a xylene cold soluble (XCS) fraction. The amount of the xylene cold soluble (XCS) fraction (sometimes also referred to as xylene solubles XS) is a parameter frequently used to determine the amount of elastomeric and/or amorphous components within a

polymer composition. The measuring method is described in further detail below under the headline "Measuring Methods". As a first approximation, the amount of the xylene cold soluble (XCS) fraction corresponds to the amount of elastomeric components and those polymer chains with low molecular weight and low stereoregularity.

In particular, the polypropylene composition comprises an amount of a xylene cold soluble (XCS) fraction determined according to ISO 16152 (25°C) in the range from 5.0 to 30 wt.- %, based on the total weight of the composition. Preferably, the amount of the xylene cold soluble (XCS) fraction of the polypropylene composition is from 10 to 30 wt.-%, more preferably from 15 to 28 wt.-%, and most preferably from 18 to 25 wt.-%, based on the total weight of the composition.

As indicated above, the polypropylene composition comprises a specific combination of comonomer units. In particular, the xylene cold soluble (XCS) fraction comprises comonomer units derived from ethylene and alpha-hexene. That is to say, the xylene cold soluble (XCS) fraction preferably consists of units derived from propylene and comonomer units derived from ethylene and alpha-hexene.

It is appreciated that the xylene cold soluble (XCS) fraction comprises comonomer units derived from

i) ethylene in an amount from 4.0 to 50 wt.-%, based on the total weight of the xylene cold soluble (XCS) fraction, and
ii) alpha-hexene in an amount from 0.5 to 10 wt.-%, based on the total weight of the xylene cold soluble (XCS) fraction.

Preferably, the xylene cold soluble (XCS) fraction comprises comonomer units derived from

i) ethylene in an amount from 4.0 to 40 wt.-%, more preferably from 4.0 to 30 wt.- % and most preferably from 5.0 to 20 wt.-%, especially from 5.5 to 13.0 wt.-%, based on the total weight of the xylene cold soluble (XCS) fraction, and
ii) alpha-hexene in an amount from 0.5 to 9.0 wt.-%, more preferably from 0.8 to 7.5 wt.-% and most preferably from 1.0 to 6.0 wt.-%, based on the total weight of the xylene cold soluble (XCS) fraction.

In one embodiment, the xylene cold soluble (XCS) fraction of the polypropylene composition thus comprises, preferably consists of, propylene units and comomoner units derived from

i) ethylene in an amount from 4.0 to 50 wt.-%, preferably from 4.0 to 40 wt.-%, more preferably from 4.0 to 30 wt.-% and most preferably from 5.0 to 20 wt.-%, especially from 5.5 to 13.0 wt.-%, based on the total weight of the xylene cold soluble (XCS) fraction, and
ii) alpha-hexene in an amount from 0.5 to 10 wt.-%, preferably from 0.5 to 9.0 wt.- %, more preferably from 0.8 to 7.5 wt.-% and most preferably from 1.0 to 6.0 wt.-%, based on the total weight of the xylene cold soluble (XCS) fraction.

The xylene cold soluble (XCS) fraction of the polypropylene composition further has an intrinsic viscosity (IV) determined according to DIN ISO 162/1 (in decalin at 135°C) in the range from 1.2 to 3.0 dl/g, preferably from 1.6 to 2.7 dl/g, more preferably from 1.8 to 2.5 dl/g.

It is preferred that the polypropylene composition further comprises a propylene copolymer (R-PP) in an amount ranging from 70 to 95 wt.-%, based on the total weight of the composition. For example, the amount of the propylene copolymer (R-PP) in the polypropylene composition is from 70 to 90 wt.-%, more preferably from 72 to 85 wt.-%, and most preferably from 75 to 82 wt.-%, based on the total weight of the composition.

It is appreciated that the polypropylene composition further comprises an elastomeric copolymer (E).

In one embodiment, the polypropylene composition comprises 70 to 95 wt.-%, based on the total weight of the polypropylene composition, of the propylene copolymer (R-PP), and 5.0 to 30 wt.-%, based on the total weight of the polypropylene composition, of the elastomeric copolymer (E). More preferably, the polypropylene composition comprises 70 to 90 wt.-%, based on the total weight of the polypropylene composition, of the propylene copolymer (R-PP), and 10 to 30 wt.-%, based on the total weight of the polypropylene composition, of the elastomeric copolymer (E). Even more preferably, the polypropylene composition comprises 72 to 85 wt.-%, based on the total weight of the polypropylene composition, of the propylene copolymer (R-PP), and 15 to 28 wt.-%, based on the total weight of the polypropylene composition, of the elastomeric copolymer (E). Most preferably, the polypropylene composition comprises 75 to 82 wt.-%, based on the total weight of the polypropylene composition, of the propylene copolymer (R-PP), and 18 to 25 wt.-%, based on the total weight of the polypropylene composition, of the elastomeric copolymer (E).

It is appreciated that the polypropylene composition comprises the propylene copolymer (R-PP) and the elastomeric copolymer (E) preferably in an amount ranging from 95.0 to 100 wt.-%, more preferably from 97.5 to 100 wt.-%, based on the total weight of the polypropylene composition. That is to say, the polypropylene composition does not comprise a further polymeric material different to the elastomeric copolymer (E) and the propylene copolymer (R-PP) in an amount exceeding 5.0 wt.-%, preferably exceeding 2.5 wt.-%, based on the total weight of the polypropylene composition. One additional polymer which may be present in such low amounts is e.g. a polyethylene which is a by-reaction product obtained by the preparation of the polypropylene composition.

In one embodiment, the polypropylene composition consists of the propylene copolymer (R-PP) and the elastomeric copolymer (E), i.e. the sum of the amounts of the propylene copolymer (R-PP) and the elastomeric copolymer (E) is 100 wt.-%, based on the total weight of the polypropylene composition.

It is appreciated that the propylene copolymer (R-PP) preferably has a moderate melt flow rate. Thus, it is preferred that the propylene copolymer (R-PP) has a melt flow rate $MFR_2$ (230°C, 2.16 kg) determined according to ISO 1133 in the range from 1.0 to 15 g/10 min, more preferably in the range from 2.0 to 12 g/10 min, still more preferably in the range from 2.0 to 10 g/10 min, like in the range from 2.0 to 8 g/10 min.

The propylene copolymer (R-PP) is preferably a random propylene copolymer (R-PP).

The term "random" indicates that the comonomers of the random propylene copolymer (R-PP), as well as of the first (random) propylene copolymer fraction (R-PP1) and the second (random) propylene copolymer fraction (R-PP2) are randomly distributed within the propylene copolymers. The term random is understood according to IUPAC (Glossary of basic terms in polymer science; IUPAC recommendations 1996).

The propylene copolymer (R-PP) preferably comprises at least two polymer fractions, like two or three polymer fractions, all of them are propylene copolymers. Even more preferred the propylene copolymer (R-PP) comprises, preferably consists of, a first propylene copolymer fraction (R-PP1) and a second propylene copolymer fraction (R-PP2).

In one embodiment, the propylene copolymer (R-PP) comprises a first propylene copolymer fraction (R-PP1) and a second propylene copolymer fraction (R-PP2) and the comonomer contents of the propylene copolymer (R-PP) and the first propylene copolymer fraction (R-PP1) fulfil inequation (I),

$$\frac{Co(RPP)}{Co(RPP1)} \geq 2.0 \qquad \text{(I)},$$

wherein Co(RPP) is the comonomer content of the propylene copolymer (R-PP) in wt.-% and Co(RPP1) is the comonomer content of the first propylene copolymer fraction (R-PP1) in wt.-%.

For example, the propylene copolymer (R-PP) comprises a first propylene copolymer fraction (R-PP1) and a second propylene copolymer fraction (R-PP2) and the comonomer contents of the propylene copolymer (R-PP) and the first propylene copolymer fraction (R-PP1) fulfil inequation (Ia), more preferably inequation (Ib), still more preferably inequation (Ic),

$$\frac{Co(RPP)}{Co(RPP1)} \geq 2.0 \qquad \text{(Ia)},$$

$$\frac{Co(RPP)}{Co(RPP1)} \geq 2.5 \qquad \text{(Ib)},$$

$$3.5 \geq \frac{Co(RPP)}{Co(RPP1)} \geq 2.5 \qquad \text{(Ic)},$$

wherein Co(RPP) is the comonomer content of the propylene copolymer (R-PP) in wt.-% and Co(RPP1) is the comonomer content of the first propylene copolymer fraction (R-PP1) in wt.-%.

Preferably, the first propylene copolymer fraction (R-PP1) and the second propylene copolymer fraction (R-PP2) differ in the comonomer content and/or in the melt flow rate $MFR_2$ (230°C / 2.16 kg), more preferably differ in the comonomer content and in the melt flow rate $MFR_2$ (230°C / 2.16 kg).

Preferably, the first propylene copolymer fraction (R-PP1) is a copolymer fraction with a lower comonomer content and the second propylene copolymer fraction (R-PP2) is a copolymer fraction with a higher comonomer content.

Accordingly, it is preferred that the first propylene copolymer fraction (R-PP1) has a comonomer content in the range from 0.2 to 10 wt.-%, preferably from 0.5 to 8.0 wt.-%, more preferably from 0.8 to 6.0 wt.-% and most preferably from 1.0 to 4.0 wt.-%, and/or that the second propylene copolymer fraction has a comonomer content in the range from 1.0 to 22 wt.-%, preferably from 1.5 to 19 wt.-%, more preferably from 2.5 to 14 wt.-% and most preferably from 3.5 to 8.0 wt.-%, based on the overall fractions (R-PP1) and (R-PP2), respectively.

Additionally or alternatively, the first propylene copolymer fraction (R-PP1) is the copolymer fraction with the lower melt flow rate $MFR_2$ (230°C / 2.16 kg) and the second propylene copolymer fraction (R-PP2) is the copolymer fraction with the higher melt flow rate $MFR_2$ (230°C / 2.16 kg).

Accordingly, it is preferred that the first propylene copolymer fraction (R-PP1) has a melt flow rate $MFR_2$ (230°C

/ 2.16 kg) in the range from 1.0 to 10 g/10 min, more preferably in the range from 1.2 to 6.0 g/10 min, still more preferably in the range from 1.4 to 4.0 g/10 min and/or that the second propylene copolymer fraction (R-PP2) has a melt flow rate $MFR_2$ (230°C / 2.16 kg) in the range from 1.0 to 12 g/10 min, more preferably in the range of 1.5 to 10 g/10 min, still more preferably in the range of 2.0 to 6.0 g/10 min.

The propylene copolymer (R-PP) is preferably produced by a single- or multistage process polymerization of propylene and alpha-hexene and optionally ethylene such as bulk polymerization, gas phase polymerization, slurry polymerization, solution polymerization or combinations thereof. The propylene copolymer (R-PP) can be made either in loop reactors or in a combination of loop and gas phase reactor. Those processes are well known to one skilled in the art.

It is appreciated that the polypropylene composition is preferably a heterophasic propylene copolymer (HECO) comprising the propylene copolymer (R-PP) and the elastomeric copolymer (E), wherein said propylene copolymer (R-PP) comprises units derived from propylene, alpha-hexene and optionally ethylene and said elastomeric copolymer (E) is a terpolymer (T) comprising units derived from propylene, ethylene and alpha-hexene.

The heterophasic propylene copolymer (HECO) according to this invention comprises a matrix (M) being the propylene copolymer (R-PP) and dispersed therein an elastomeric propylene copolymer (E). Thus, the matrix (M) contains (finely) dispersed inclusions being not part of the matrix (M) and said inclusions contain the elastomeric propylene copolymer (E). The term inclusion indicates that the matrix (M) and the inclusion form different phases within the heterophasic propylene copolymer. The presence of second phases or the so called inclusions are for instance visible by high resolution microscopy, like electron microscopy or atomic force microscopy, or by dynamic mechanical thermal analysis (DMTA).

The propylene copolymer (R-PP) corresponds, as a first approximation, to a xylene cold insoluble (XCI) fraction in the polypropylene composition.

In view of the above, it is appreciated that the polypropylene composition preferably comprises a xylene cold insoluble (XCI) fraction in an amount ranging from 70 to 95 wt.-%, based on the total weight of the composition. Preferably, the amount of the xylene cold insoluble (XCI) fraction in the polypropylene composition is from 70 to 90 wt.-%, more preferably from 72 to 85 wt.-%, and most preferably from 75 to 82 wt.-%, based on the total weight of the composition.

In one embodiment, the polypropylene composition comprises 70 to 95 wt.-%, based on the total weight of the polypropylene composition, of the xylene cold insoluble (XCI) fraction, and 5.0 to 30 wt.-%, based on the total weight of the polypropylene composition, of the xylene cold soluble (XCS) fraction. More preferably, the polypropylene composition comprises 70 to 90 wt.-%, based on the total weight of the polypropylene composition, of the xylene cold insoluble (XCI) fraction, and 10 to 30 wt.-%, based on the total weight of the polypropylene composition, of the xylene cold soluble (XCS) fraction. Even more preferably, the polypropylene composition comprises 72 to 85 wt.-%, based on the total weight of the polypropylene composition, of the xylene cold insoluble (XCI) fraction, and 15 to 28 wt.-%, based on the total weight of the polypropylene composition, of the xylene cold soluble (XCS) fraction. Most preferably, the polypropylene composition comprises 75 to 82 wt.-%, based on the total weight of the polypropylene composition, of the xylene cold insoluble (XCI) fraction, and 18 to 25 wt.-%, based on the total weight of the polypropylene composition, of the xylene cold soluble (XCS) fraction.

Accordingly, it is preferred that the xylene cold insoluble (XCI) fraction comprises comonomer units derived from alpha-hexene and optionally ethylene and. That is to say, the xylene cold insoluble (XCI) fraction preferably consists of units derived from propylene and comonomer units derived from alpha-hexene and optionally ethylene.

It is appreciated that the xylene cold insoluble (XCI) fraction comprises comonomer units derived from

i) ethylene in an amount from 0 to 10 wt.-%, based on the total weight of the xylene cold insoluble (XCI) fraction, and
ii) alpha-hexene in an amount from 1.0 to 12 wt.-%, based on the total weight of the xylene cold insoluble (XCI) fraction.

Preferably, the xylene cold insoluble (XCI) fraction comprises comonomer units derived from

i) ethylene in an amount from 0 to 9.0 wt.-%, more preferably from 0 to 5.0 wt.-% and most preferably from 0 to 1.0 wt.-%, based on the total weight of the xylene cold insoluble (XCI) fraction, and
ii) alpha-hexene in an amount from 1.5 to 10 wt.-%, more preferably from 2.5 to 9.0 wt.-% and most preferably from 3.5 to 7.0 wt.-%, based on the total weight of the xylene cold insoluble (XCI) fraction.

In one embodiment, the xylene cold insoluble (XCI) fraction of the polypropylene composition thus comprises, preferably consists of, propylene units and comomoner units derived from

i) ethylene in an amount from 0 to 9.0 wt.-%, more preferably from 0 to 5.0 wt.-% and most preferably from 0 to 1.0 wt.-%, based on the total weight of the xylene cold insoluble (XCI) fraction, and
ii) alpha-hexene in an amount from 1.5 to 10 wt.-%, more preferably from 2.5 to 9.0 wt.-% and most preferably from 3.5 to 7.0 wt.-%, based on the total weight of the xylene cold insoluble (XCI) fraction.

In view of the above, it is preferred that the total content of comonomers, i.e. the sum of the alpha-hexene and the optional ethylene, in the xylene cold insoluble (XCI) fraction of the polypropylene composition is from 1.0 to 22 wt.-%, preferably from 1.5 to 19 wt.-%, more preferably from 2.5 to 14 wt.-% and most preferably from 3.5 to 8 wt.-%, based on the total weight of the xylene cold insoluble (XCI) fraction.

The polypropylene composition as defined in the instant invention may contain up to 5.0 wt.- % additives, like nucleating agents and antioxidants, as well as slip agents and antiblocking agents. Preferably the additive content (without $\alpha$-nucleating agents) is below 3.0 wt.-%, like below 1.0 wt.-%.

The polypropylene composition according to this invention is preferably prepared in the presence of a metallocene catalyst.

The polypropylene composition according to the present invention is preferably prepared in the presence of a metallocene catalyst (MC) comprising a transition metal compound.

In a preferred embodiment the transition metal compound has the formula (I)

$$R_n(Cp)_2MX_2 \qquad (I)$$

wherein

each Cp independently is an unsubstituted or substituted and/or fused cyclopentadienyl ligand, e.g. substituted or unsubstituted cyclopentadienyl, substituted or unsubstituted indenyl or substituted or unsubstituted fluorenyl ligand; the optional one or more substituent(s) being independently selected preferably from halogen, hydrocarbyl ( e.g. C1-C20-alkyl, C2-C20-alkenyl, C2- C20-alkynyl, C3-C12-cycloalkyl, C6-C20-aryl or C7-C20-arylalkyl), C3-C12- cycloalkyl which contains 1, 2, 3 or 4 heteroatom(s) in the ring moiety, C6-C20- heteroaryl, C1-C20-haloalkyl, $-SiR''_3$, $-OSiR''_3$, -SR", $-PR''_2$, OR" or $-NR''_2$,

each R" is independently a hydrogen or hydrocarbyl, e.g. C1-C20-alkyl, C2- C20-alkenyl, C2-C20-alkynyl, C3 -C12-cycloalkyl or C6-C20-aryl; or e.g. in case of $-NR''_2$, the two substituents R" can form a ring, e.g. five- or six-membered ring, together with the nitrogen atom to which they are attached;

R is a bridge of 1-3 atoms, e.g. a bridge of 1-2 C-atoms and 0-2 heteroatoms, wherein the heteroatom(s) can be e.g. Si, Ge and/or O atom(s), wherein each of the bridge atoms may bear independently substituents, such as Cl-C20-alkyl, tri(C1-C20-alkyl)silyl, tri(C1-C20-alkyl)siloxy or C6-C20-aryl substituents); or a bridge of 1-3 , e.g. one or two, hetero atoms, such as silicon, germanium and/or oxygen atom(s), e.g. $-SiR^{10}_2$, wherein each $R^{10}$ is independently C1-C20-alkyl, C3-12 cycloalkyl, C6-C20-aryl or tri(C1-C20-alkyl)silyl-residue, such as trimethylsilyl;

M is a transition metal of Group 4, e.g. Zr or Hf, especially Zr;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", $-PR''_3$, $-SiR''_3$, $-OSiR''_3$, $-NR''_2$ or $-CH_2$-Y, wherein Y is C6-C20-aryl, C6-C20-heteroaryl, C1-C20-alkoxy, C6-C20-aryloxy, $NR''_2$,-SR", $-PR''_3$, - $SiR''_3$, or $-OSiR''_3$;

each of the above mentioned ring moieties alone or as a part of another moiety as the substituent for Cp, X, R" or R can further be substituted e.g. with C1-C20-alkyl which may contain Si and/or O atoms;

n is 1 or 2.

Suitably, in each X as $-CH_2$-Y, each Y is independently selected from C6-C20-aryl, $NR''_2$, $-SiR''_3$ or $-OSiR''_3$. Most preferably, X as $-CH_2$-Y is benzyl. Each X other than $-CH_2$-Y is independently halogen, C1-C20-alkyl, C1-C20-alkoxy, C6- C20-aryl, C7-C20-arylalkenyl or $-NR''_2$ as defined above, e.g. $-N(C1\text{-}C20\text{-alkyl})_2$.

Preferably, each X is halogen, methyl, phenyl or $-CH_2$-Y, and each Y is independently as defined above.

Cp is preferably cyclopentadienyl, indenyl, or fluorenyl, optionally substituted as defined above. Ideally Cp is cyclopentadienyl or indenyl.

In a suitable subgroup of the compounds of formula (I), each Cp independently bears 1, 2, 3 or 4 substituents as defined above, preferably 1, 2 or 3, such as 1 or 2 substituents, which are preferably selected from C1-C20-alkyl, C6- C20-aryl, C7-C20-aryialkyl (wherein the aryl ring alone or as a part of a further moiety may further be substituted as indicated above), $-OSiR''_3$, wherein R" is as indicated above, preferably C1-C20-alkyl.

R, is preferably a methylene, ethylene or a silyl bridge, whereby the silyl can be substituted as defined above, e.g. a (dimethyl)Si=, (methylphenyl)Si=, (methylccylcohexyl)silyl= or (trimethylsilylmethyl)Si=; n is 0 or 1. Preferably,

R" is other than hydrogen.

A specific subgroup includes the well known metallocenes of Zr and Hf with two eta5-ligands which are bridged with cyclopentadienyl ligands optionally- substituted with e.g. siloxy, or alkyl (e.g. C1-6-alkyl) as defined above, or with two bridged indenyl ligands optionally substituted in any of the ring moieties with e.g. siloxy or alkyl as defined above, e.g. at 2-, 3-, 4- and/or 7-positions. Preferred bridges are ethylene or $-SiMe_2$.

The preparation of the metallocenes can be carried out according or analogously to the methods known from the literature and is within skills of a person skilled in the field. Thus for the preparation see e.g. EP-A-129 368, examples of compounds wherein the metal atom bears a $-NR''_2$ ligand see i.a. in WO-A-985683 1 and WO-A-0034341. For the preparation see also e.g. in EP-A-260 130. WO-A- 9728170, WO-A-9846616, WO-A-9849208, WO-A-9912981, WO-A-9919335, WO-A-9856831, WO-A-00 34341, EP-A-423 101 and EP-A-537 130.

The complexes of the invention are preferably asymmetrical. That means simply that the two indenyl ligands forming the metallocene are different, that is, each indenyl ligand bears a set of substituents that are either chemically different, or located in different positions with respect to the other indenyl ligand. More precisely, they are chiral, racemic bridged bisindenyl metallocenes. Whilst the complexes of the invention may be in their syn configuration ideally, they are in their anti configuration. For the purpose of this invention, racemic-anti means that the two indenyl ligands are oriented in opposite directions with respect to the cyclopentadienyl-metal-cyclopentadienyl plane, while racemic-syn means that the two indenyl ligands are oriented in the same direction with respect to the cyclopentadienyl-metal-cyclopentadienyl plane.

Preferred complexes of the invention are of formula (II') or (II)

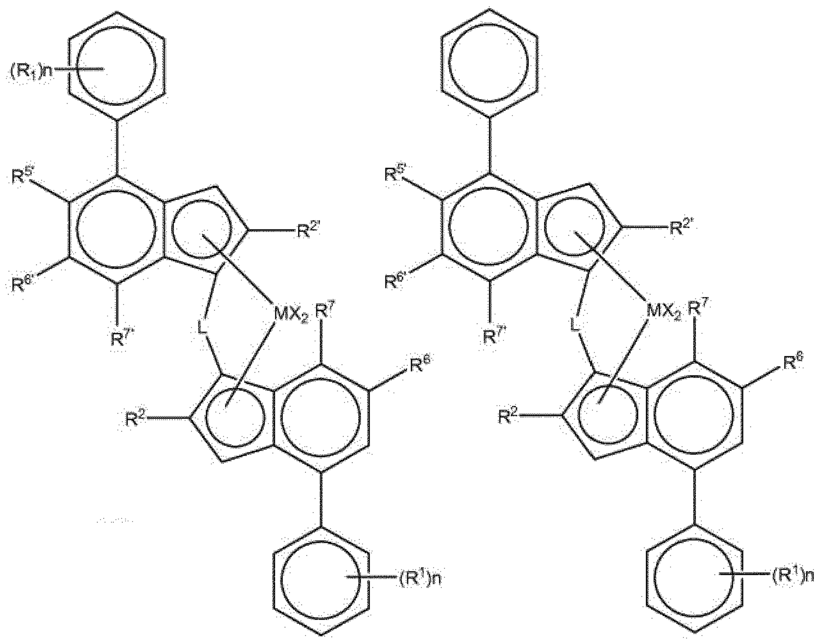

(II) (II')

wherein

M is Zr;

each X is a sigma ligand, preferably each X is independently a hydrogen atom, a halogen atom, a C1-C6 alkoxy group, C1-C6 alkyl, phenyl or a benzyl group;

L is a divalent bridge selected from $-R'_2C-$, $-R'_2C-CR'_2$, $-R'_2Si-$, $-R'_2Si-SiR'_2-$, $-R'_2Ge-$, wherein each R' is independently a hydrogen atom, C1-C20 alkyl, C3-C10 cycloalkyl, tri(C1-C20-alkyl)silyl, C6-C20-aryl, C7-C20 arylalkyl

each $R^2$ or $R^{2'}$ is a C1-C10 alkyl group;

$R^{5'}$ is a C1-C10 alkyl group or a $Z'R^{3'}$ group;

$R^6$ is hydrogen or a C1-C10 alkyl group;

$R^{6'}$ is a C1-C10 alkyl group or a C6-C10 aryl group;

$R^7$ is hydrogen, a C1-C6 alkyl group or a $ZR^3$ group;

$R^{7'}$ is hydrogen or a C1-C10 alkyl group;

Z and Z' are independently O or S;

$R^{3'}$ is a C1-C10 alkyl group, or a C6-C10 aryl group optionally substituted by one or more halogen groups;

$R^3$ is a C1-C10 alkyl group;

each n is independently 0 to 4, e.g. 0, 1 or 2;

and each $R^1$ is independently a C1-C20 hydrocarbyl group, e.g. a C1-C10 alkyl group.

Particularly preferred compounds of the invention include:

rac-dimethylsilanediylbis[2-methyl-4-(4-tert-butylphenyl)-1,5,6,7-tetrahydro-s- indacen-1-yl] zirconium dichloride
*rac*-dimethylsilanediylbis(2-methyl-4-phenyl-5-methoxy-6-*tert*-butylinden-1-yl) zirconium dichloride
*rac*-anti-$Me_2$Si(2-Me-4-Ph-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-Ph-5-OMe-6-*t*Bu-Ind)$ZrCl_2$
*rac*-anti-$Me_2$Si(2-Me-4-(3,5-di-*t*BuPh)-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-Ph-5-$OC_6F_5$)-6-*i*Pr-Ind)$ZrCl_2$
*rac*-anti-Me(CyHex)Si(2-Me-4-Ph-6-*t*Bu-Ind)(2-Me-4-Ph-5-OMe-6-*t*Bu-Ind)$ZrCl_2$
*rac*-anti-$Me_2$Si(2-Me-4-(3,5-di-*t*BuPh)-7-Me-Ind)(2-Me-4-Ph-5-OMe-6-*t*Bu-Ind)$ZrCl_2$
*rac*-anti-$Me_2$Si(2-Me-4-(3,5-di-*t*BuPh)-7-OMe-Ind)(2-Me-4-Ph-5-OMe-6-*t*Bu-Ind)$ZrCl_2$
*rac*-anti-$Me_2$Si(2-Me-4-(p-*t*BuPh)-6-*t*Bu-Ind)(2-Me-4-Ph-5-OMe-6-*t*Bu-Ind)$ZrCl_2$
*rac*-anti-$Me_2$Si(2-Me-4-(p-*t*BuPh)-Ind)(2-Me-4-(4-*t*BuPh)-5-OMe-6-*t*Bu-Ind)$ZrCl_2$
*rac*-anti-$Me_2$Si(2-Me-4-(p-*t*BuPh)-Ind)(2-Me-4-(3,5-*t*Bu2Ph)-5-OMe-6-*t*Bu-Ind)$ZrCl_2$
*rac*-anti-$Me_2$Si(2-Me-4-(p-*t*BuPh)-Ind)(2-Me-4-Ph-5-O*t*Bu-6-*t*Bu-Ind)$ZrCl_2$.

The most preferred metallocene complex (procatalyst) is rac-anti-dimethylsilandiyl(2-methyl-4-phenyl-5-methoxy-6-tert-butyl-indenyl)(2-methyl-4-(4-tert-butylphenyl)indenyl)zirconium dichloride.

Besides the metallocene complex (procatalyst), the metallocene catalyst comprises additionally a cocatalyst as defined in WO 2015/011135 A1. Accordingly the preferred cocatalyst is methylaluminoxane (MAO) and/or a borate, preferably trityl tetrakis(pentafluorophenyl)borate.

It is especially preferred that the metallocene catalyst is unsupported, i.e. no external carrier is used. Regarding the preparation of such a metallocene complex again reference is made to WO 2015/011135 A1.

In the polymerization process according to the present invention fresh catalyst is preferably only introduced into the first reactor or, if present, into the prepolymerization reactor or vessel, i.e. no fresh catalyst is introduced into the second reactor or any further reactor being present upstream of the first reactor or upstream of the prepolymerization vessel. Fresh catalyst denotes the virgin catalyst species or the virgin catalyst species subjected to a prepolymerization.

The instant polypropylene composition is preferably produced in a multi-stage process, preferably comprising at least two reactors connected in series.

Furthermore, the weight ratio between the first propylene copolymer fraction (R-PP1) and second propylene copolymer fraction (R-PP2) preferably is 20:80 to 80:20, more preferably 25:75 to 75:25, still more preferably 40:60 to 60:40.

The polypropylene composition is preferably obtained by a process in which the propylene copolymer (R-PP) is prepared in a first stage and optionally second stage and the elastomeric copolymer (E) is prepared in a further stage in the presence of the propylene copolymer (R-PP).

In particular, the polypropylene composition is preferably obtained by a sequential polymerization process comprising the steps of

a) polymerizing in a first reactor (R1) propylene, alpha-hexene and optionally ethylene, obtaining a first propylene copolymer fraction (R-PP1),

b) transferring the first propylene copolymer fraction (R-PP1) into a second reactor (R2),
c) polymerizing in said second reactor (R2) in the presence of the first propylene copolymer fraction (R-PP1) propylene, alpha-hexene and optionally ethylene, obtaining a second copolymer fraction (R-PP2), said first propylene copolymer fraction (R-PP1) and said second copolymer fraction (R-PP2) forming the propylene copolymer (R-PP),
d) transferring said propylene copolymer (R-PP) into a third reactor (R3),
e) polymerizing in said third reactor (R3) in the presence of the propylene copolymer (R-PP) propylene, ethylene and alpha-hexene, obtaining a third polymer fraction, said polymer fraction is the elastomeric copolymer (E), said propylene copolymer (R-PP) and said elastomeric propylene copolymer (E) form the polypropylene composition.

For preferred embodiments of the polypropylene composition, the propylene copolymer (R-PP), the first propylene copolymer fraction (R-PP1), the second propylene copolymer fraction (R-PP2), and the elastomeric copolymer (E) reference is made to the definitions given above.
The term "sequential polymerization process" indicates that the polypropylene composition is produced in at least two, like three, reactors connected in series. Accordingly, the present process comprises at least a first reactor, a second reactor, and optionally a third reactor. The term "polymerization process" shall indicate that the main polymerization takes place. Thus in case the process consists of three polymerization reactors, this definition does not exclude the option that the overall process comprises for instance a pre-polymerization step in a pre-polymerization reactor. The term "consist of" is only a closing formulation in view of the main polymerization process.
The first reactor is preferably a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.
The second reactor and the third reactor are preferably gas phase reactors. Such gas phase reactors can be any mechanically mixed or fluid bed reactors. Preferably the gas phase reactors comprise a mechanically agitated fluid bed reactor with gas velocities of at least 0.2 m/sec. Thus, it is appreciated that the gas phase reactor is a fluidized bed type reactor preferably with a mechanical stirrer.
Thus, in a preferred embodiment the first reactor is a slurry reactor, like loop reactor, whereas the second reactor and the third reactor (R3) are gas phase reactors (GPR). Accordingly, for the instant process at least three, preferably three polymerization reactors, namely a slurry reactor, like loop reactor, a first gas phase reactor and a second gas phase reactor are connected in series are used. If needed prior to the slurry reactor a pre-polymerization reactor is placed.
A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.
A further suitable slurry-gas phase process is the Spheripol® process of Basell.
Preferably, in the instant process for producing the polypropylene composition as defined above the conditions for the first reactor, i.e. the slurry reactor, like a loop reactor, may be as follows:

- the temperature is within the range of 50°C to 110°C, preferably between 60°C and 100°C, more preferably between 68°C and 95°C,
- the pressure is within the range of 20 bar to 80 bar, preferably between 40 bar to 70 bar,
- hydrogen can be added for controlling the molar mass in a manner known per se.

Subsequently, the reaction mixture of the first reactor is transferred to the second reactor, i.e. gas phase reactor, where the conditions are preferably as follows:

- the temperature is within the range of 50°C to 130°C, preferably between 60°C and 100°C,
- the pressure is within the range of 5 bar to 50 bar, preferably between 15 bar to 35 bar,
- hydrogen can be added for controlling the molar mass in a manner known per se.

The condition in the third reactor is similar to the second reactor.
The residence time can vary in the three reactor zones.
In one embodiment of the process for producing the polypropylene composition the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.
If desired, the polymerization may be effected in a known manner under supercritical conditions in the first reactor, i.e. in the slurry reactor, like in the loop reactor, and/or as a condensed mode in the gas phase reactors.
Preferably, the process comprises also a prepolymerization with the catalyst system, as described in detail above.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60°C, preferably from 15 to 50°C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

According to the invention the polypropylene composition is obtained by a multi-stage polymerization process, as described above, in the presence of a catalyst system, as described above.

The present invention is not only directed to the polypropylene composition but also to films made therefrom.

Accordingly, a further aspect of the present invention is directed to a film comprising the polypropylene composition having, when measured on a 50 $\mu$m cast film,

a) a clarity before and/or after sterilization as measured according to ASTM a clarity before and/or after sterilization as measured according to ASTM D1003-00 in the range from 95.0 to 100.0 %, preferably from 97.0 to 100.0 %, and/or
b) a haze before sterilization as measured according to ASTM D1003-00 in the range from 0.01 to 1.0 %, preferably in the range from 0.01 to 0.8 %, more preferably in the range from 0.1 to 0.8 %, and/or
c) a haze after sterilization as measured according to ASTM D1003-00 in the range from 0.01 to 10.0 %, preferably in the range from 0.01 to 8.0 %, more preferably in the range from 1.0 to 8.0 %, and/or
d) a tensile modulus in machine direction and/or transverse direction as measured according to ISO 527-3 at 23°C in the range from 200 to 600 MPa, preferably from 300 to 500 MPa, more preferably from 300 to 448 MPa.

For example, the film, when measured on a 50 $\mu$m cast film, has

a) a clarity before and/or after sterilization as measured according to ASTM D1003-00 in the range from 95.0 to 100.0 %, preferably from 97.0 to 100.0 %, and
b) a haze before sterilization as measured according to ASTM D1003-00 in the range from 0.01 to 1.0 %, preferably in the range from 0.01 to 0.8 %, more preferably in the range from 0.1 to 0.8 %, and
c) a haze after sterilization as measured according to ASTM D1003-00 in the range from 0.01 to 10.0 %, preferably in the range from 0.01 to 8.0 %, more preferably in the range from 1.0 to 8.0 %, and
d) a tensile modulus in machine direction and/or transverse direction as measured according to ISO 527-3 at 23°C in the range from 200 to 600 MPa, preferably from 300 to 500 MPa, more preferably from 300 to 448 MPa.

Furthermore, the film has a good sealability. Therefore, the inventive film preferably has a sealing initiation temperature (SIT) as determined by a method described in the example section herein in the range from 90 to 110°C, preferably from 96 to 108°C.

It is appreciated that the film is preferably prepared from the polypropylene composition defined herein.

The film is preferably a multilayer film, wherein at least one layer comprises the polypropylene composition.

For example, the film is a multilayer film having at least three layers ABC, wherein the B layer comprises the polypropylene composition. In particular, the multilayer film comprises additional layers over and above the layer comprising the polypropylene composition. The nature and number of these additional layers is determined by the use of the film.

It is appreciated that apart of layer B of the multilayer film, also any or several other layers may be comprise the polypropylene composition of the present invention. For example, each of the layers of a multilayer film having at least three layers ABC may be prepared from the polypropylene composition of the present invention.

Methods for producing such films are well known in the art. In one embodiment, the layer comprising the polypropylene composition and optional additional layers are coextruded to produce the suitable film structure. The coextruded film may then be blown to a film. In another embodiment, the layers are produced separately and are laminated together. It is also possible to coextrude the layer comprising the polypropylene composition and then laminate the optional additional layers.

Furthermore, the present invention refers to a sterilizable or sterilized film. More preferably the invention is directed to pouches, especially to sterilizable or sterilized pouches, comprising, preferably consisting of, the film as defined herein. Further said pouch has been preferably subjected to a sterilization treatment.

The present invention will be described in further detail by the examples provided below.

## EXAMPLES

### A. Measuring methods

The following definitions of terms and determination methods apply for the above general description of the invention as well as to the below examples unless otherwise defined.

**$MFR_2$ (230 °C)** is measured according to ISO 1133 (230°C, 2.16 kg load).

### Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 2373).

Standard single-pulse excitation was employed utilising the NOE at short recycle delays of 3s (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (mmmm) at 21.85 ppm.

The presence of 2,1-erythro regio defects was indicated by the presence of the $P\alpha\beta$ and $P\alpha\gamma$ methyl sites at 17.7 and 17.2 ppm and $S\alpha\alpha\beta$ (e9) methylene site at 42.4 ppm and confirmed by other characteristic signals (Resconi, L., Cavallo, L., Fait, A., Piemontesi, F., Chem. Rev. 2000, 100, 1253).

$$P_{21e} = I_{e9}$$

The total amount of secondary (2,1) inserted propene was quantified as the sum of all units containing secondary inserted propene:

$$P_{21} = P_{21e}$$

Characteristic signals corresponding to other regio defects were not observed (Resconi, L., Cavallo, L., Fait, A., Piemontesi, F., Chem. Rev. 2000, 100, 1253).

The amount of primary (1,2) inserted propene was quantified based on the propene methylene sites between 48.1 and 45.0 ppm ($I_{CH2}$) with correction for any included sites not related to primary insertion:

$$P_{12} = I_{CH2} + 2*P_{21e} + H + E + 0.5*EE$$

The total amount of propene was quantified as the sum of primary (1,2) inserted propene and all regio defects:

$$Ptotal = P_{12} + P_{21}$$

Characteristic signals corresponding to the incorporation of 1-hexene were observed and the comonomer fraction calculated as the fraction of 1-hexene in the polymer with respect to all monomer in the polymer:

$$fHtotal = Htotal / ( Etotal + Ptotal + Htotal)$$

The amount isolated 1-hexene incorporated in PPHPP sequences was quantified using the integral of the αB4 sites at 44.1 ppm accounting for the number of reporting sites per comonomer:

$$H = I\alpha B4 / 2$$

With no sites indicative of consecutive incorporation observed the total 1-hexen comonomer content was calculated solely on this quantity:

$$Htotal = H$$

Characteristic signals corresponding to the incorporation of ethylene were observed and the comonomer fraction calculated as the fraction of ethylene in the polymer with respect to all monomer in the polymer:

$$fEtotal = Etotal / ( Etotal + Ptotal + Htotal )$$

The presence of non-consecutive ethylene incorporation in PPEPEPP sequences was indicated by the presence of the Tδδ site at 33.1 ppm and confirmed by other characteristic signals.

The amount isolated and non-consecutive ethylene incorporated in PPEPP and PPEPEPP sequences respectively was quantified using the integral of the Sββ sites at 24.5 ppm accounting for the number of reporting sites per comonomer:

$$E = I_{S\beta\beta}$$

When observable the amount double consecutively incorporated ethylene in PPEEPP sequences was quantified using the integral of the Sβδ site at 27.1 ppm accounting for the number of reporting sites per comonomer:

$$EE = I_{S\beta\delta}$$

When observable the amount triple or longer consecutively incorporated ethylene in PP(E)nPP sequences was quantified using the integral of the Sδδ and Sγδ sites at 30.1 and 37.4 ppm accounting for the number of reporting sites per comonomer:

$$EEE = ( I_{S\delta\delta} / 2 ) + ( I_{S\gamma\delta} / 4 )$$

The total ethylene content was calculated based on the sum of observable isolated and consecutively incorporated ethylene:

$$Etotal = E + EE + EEE$$

The mole percent comonomer incorporation is calculated from the mole fraction:

$$H [mol\%] = 100 * fHtotal$$

$$E [mol\%] = 100 * fEtotal$$

The weight percent comonomer incorporation is calculated from the mole fraction:

$$H [wt\%] = 100 * ( fHtotal * 84.16 ) / ( (fEtotal * 28.05) + (fHtotal * 84.16) + ((1-(fEtotal+fHtotal)) * 42.08) )$$

$$E [wt\%] = 100 * ( fEtotal * 28.05 ) / ( (fEtotal * 28.05) + (fHtotal * 84.16) + ((1-(fEtotal+fHtotal)) * 42.08) )$$

**Intrinsic viscosity** was measured according to DIN ISO 1628/1, October 1999 (in Decalin at 135°C).

**The xylene cold solubles (XCS, wt.-%) and xylene cold insolubles (XCI, wt.-%):** Content of xylene cold solubles (XCS) was determined at 25°C according ISO 16152; first edition; 2005-07-01. In particular, the xylene cold solubles (XCS) were determined by filtering the mixture and drying the solution. The part which remained insoluble, i.e. the residue on the filter, is the xylene cold insoluble (XCI) fraction.

**Melting temperature ($T_m$)** was measured with Mettler TA820 differential scanning calorimetry (DSC) on 5 to 10 mg samples. DSC is run according to ISO 11357-3: 1999 in a heat / cool / heat cycle with a scan rate of 10 °C/min in the temperature range of +23 to +210°C.

**Haze and clarity** were determined according to ASTM D1003-00 and on cast films of 50 μm thickness produced on a monolayer cast film line.

**Tensile modulus** in machine and transverse direction was determined according to ISO 527-3 at 23°C on cast films of 50 μm thickness produced on a monolayer cast film line with a melt temperature of 220°C and a chill roll temperature of 20 °C. Testing was performed at a cross head speed of 1 mm/min.

**Steam sterilization** was performed in a Systec D series machine (Systec Inc., USA). The samples were heated up at a heating rate of 5°C/min starting from 23°C. After having been kept for 30 min at 121°C, they were removed immediately from the steam sterilizer and stored at room temperature till processed further.

**Sealing initiation temperature (SIT); sealing end temperature (SET), sealing range:** The method determines the sealing temperature range (sealing range) of polypropylene films, in particular blown films or cast films. The sealing temperature range is the temperature range, in which the films can be sealed according to conditions given below. The lower limit (heat sealing initiation temperature (SIT)) is the sealing temperature at which a sealing strength of > 5 N is achieved. The upper limit (sealing end temperature (SET)) is reached, when the films stick to the sealing device. The sealing range is determined on a J&B Universal Sealing Machine Type 3000 with a film of 50 or 100 μm thickness with the following further

parameters: Specimen width: 25.4 mm
Seal Pressure: 0.1 $N/mm^2$
Seal Time: 0.1 sec
Cool time: 99 sec
Peel Speed: 10 mm/sec
Start temperature: 80 °C

End temperature: 150 °C Increments: 10 °C specimen is sealed A to A at each sealbar temperature and seal strength (force) is determined at each step. The temperature is determined at which the seal strength reaches 5 N.

**B. Examples**

*Preparation of the catalyst system for the inventive examples*

The catalyst used in the inventive examples is prepared as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoropropoxy)-1-propanol. The metallocene complex (MC1 in WO 2015/011135 A1) is prepared as described in WO 2013/007650 A1 (metallocene E2 in WO 2013/007650 A1).

*Polymerization and Pelletization*

Polymer compositions IE1 and IE2 were produced in a Borstar pilot plant comprising a prepolymerisation reactor, a loop reactor and two gas phase reactors in series. The polymerisation conditions are indicated in Table 1.

Both polyproylene compositions IE1 and IE2 were compounded in a co-rotating twin-screw extruder Coperion ZSK 57 at 220 °C with 0.2 wt% of Irganox B225 (1:1-blend of Irganox 1010 (Pentaerythrityl-5 tetrakis(3-(3',5'-di-tert.butyl-4-hydroxytoluyl)-propionate and tris (2,4-di-t-butylphenyl) phosphate) phosphite) of BASF AG, Germany) and 0.1 wt% calcium stearate followed by solidification of the resulting melt strands in a water bath and pelletization.

Table 1: Polymerization process conditions and properties of the polypropylene compositions

| **B1 Prepoly reactor** | IE1 | IE2 |
|---|---|---|
| Temp. (°C) | 20 | 20 |
| Press. (kPa) | 5336 | 5340 |
| **B2 loop reactor** | | |
| Temp. (°C) | 70 | 70 |
| Press. (kPa) | 5225 | 5224 |
| H2/C3 ratio (mol/kmol) | 0.1 | 0.1 |
| C6/C3 ratio (mol/kmol) | 3.1 | 3.1 |
| C2/C3 ratio (mol/kmol) | 0 | 0 |
| C6 content (loop) (wt.%) | 1.7 | 1.7 |
| C2 content (loop) (wt.%) | 0.0 | 0.0 |
| MFR loop (g/10min) | 2.0 | 2.0 |
| Split (wt.-%) | 35 | 37 |
| **B3 GPR1** | | |
| Temp. (°C) | 75 | 75 |
| Press. (kPa) | 2400 | 2400 |
| H2/C3 ratio (mol/kmol) | 1.4 | 1.1 |
| C6/C3 ratio (mol/kmol) | 9.3 | 9.5 |
| C2/C3 ratio (mol/kmol) | 0.0 | 0.0 |
| MFR GPR1 (g/10 min) | 3.4 | 3.3 |
| C6 content (GPR1) (wt.-%) | 5.0 | 5.1 |
| C2 content (GPR1) (wt.-%) | 0.0 | 0.0 |
| Split (wt.-%) | 65 | 63 |
| **B4 GPR2** | | |
| Temp. (°C) | 65 | 65 |
| Press. (kPa) | 2500 | 2491 |
| H2/C3 ratio (mol/kmol) | 0.013 | 0.043 |
| C6/C3 ratio (mol/kmol) | 0.0 | 0.0 |
| C2/C3 ratio (mol/kmol) | 411 | 320 |

**Cast film production**

Films were produced on a Barmag CAST-Coex pilot line, equipped with an extruder of 60 mm diameter and an LID ratio of 30. A coathanger die with a die width of 800 mm and a die gap of 0.5 mm was used. The 50 μm films were produced in cast mode with an output of 60 kg/h, a line speed of 30 m/min and a melt temperature of 239 °C. Roll settings: 1st roll: diameter 400 mm and 15 °C; 2 nd roll: diameter 250 mm and 25 °C. Electric pinning via electrostatic charging was applied.

The characteristics of the polypropylene compositions and the results of the films are provided below in table 2.

Table 2: Characteristics of the polypropylene compositions and the results of the films

| | IE1 | IE2 | CE1 | CE2 |
|---|---|---|---|---|
| MFR (g/10min) | 2.6 | 3.2 | 4 | 8 |
| XCS (wt.-%) | 21.36 | 20.81 | 19 | 9.8 |
| IV (XCS) (dl/g) | 2.39 | 2.07 | 1.5 | nd |
| C2/XCS (wt.-%) | 6.5 | 9.0 | 29 | nd |
| C6/XCS (wt.-%) | 2.9 | 1.9 | 0.0 | nd |
| C2/XCI (wt.-%) | 0 | 0 | nd | nd |
| C6/XCI (wt.-%) | 5.2 | 5.2 | nd | nd |
| Tm (°C) | 133 | 132 | 142 | 140 |
| | | | | |
| Tensile modulus in machine direction (MPa) | 432 | 430 | 449 | 488 |
| Tensile modulus in transverse direction (MPa) | 440 | 446 | 413 | 501 |
| Haze before sterilization (%) | 0.71 | 0.36 | 1.49 | 0.17 |
| Haze after sterilization (%) | 2.93 | 7.33 | 3.5 | 15 |
| Clarity before sterilization (%) | 97.7 | 99.2 | 98.5 | 100 |
| Clarity after sterilization (%) | 97.6 | 98.7 | 97.6 | 91 |
| SIT [°C] | 101 | nd | 118 | 114 |
| CE1 corresponds to the commercial random propylene copolymer SC820CF of Borealis AG and is prepared by using a Ziegler-Natta catalyst.<br>CE2 corresponds to the commercial random propylene copolymer RD808CF of Borealis AG and is prepared by using a Ziegler-Natta catalyst. | | | | |

From the results, it can be gathered that the inventive polypropylene compositions IE1 and IE2 have excellent combination of softness, sealability in combination with good optics, especially clarity and haze. In particular, the sealing initiation temperature (SIT) is more than 10°C lower than that of the comparative examples CE1 and CE2.

## Claims

**1.** Polypropylene composition having a melt flow rate $MFR_2$ (230°C / 2.16 kg) measured according to ISO 1133 in the range from 1.0 to 6.0 g/10min, and a melting temperature Tm measured by differential scanning calorimetry (DSC) in the range from 120 to 145°C, the polypropylene composition comprising an amount of a xylene cold soluble (XCS) fraction determined according to ISO 16152 (25°C) in the range from 5 to 30 wt.-%, based on the total weight of the composition, the xylene cold soluble (XCS) fraction having an intrinsic viscosity (IV) determined according to DIN ISO 162/1 (in decalin at 135°C) in the range from 1.2 to 3.0 dl/g and comprising comonomer units derived from

i) ethylene in an amount from 4.0 to 50 wt.-%, based on the total weight of the xylene cold soluble (XCS) fraction, and
ii) alpha-hexene in an amount from 0.5 to 10 wt.-%, based on the total weight of the xylene cold soluble (XCS) fraction.

**2.** The polypropylene composition according to claim 1, wherein the polypropylene composition comprises a propylene copolymer (R-PP) in an amount from 70 to 95 wt.-%, based on the total weight of the composition.

**3.** The polypropylene composition according to claim 2, wherein the propylene copolymer (R-PP) has a melt flow rate $MFR_2$ (230°C / 2.16 kg) measured according to ISO 1133 in the range from 1.0 to 15 g/10min.

**4.** The polypropylene composition according to any one of claims 1 to 3, wherein the propylene copolymer (R-PP) comprises a first propylene copolymer fraction (R-PP1) and a second propylene copolymer fraction (R-PP2) and the comonomer contents of the propylene copolymer (R-PP) and the first propylene copolymer fraction (R-PP1) fulfil inequation (I),

$$\frac{Co(RPP)}{Co(RPP1)} \geq 2.0 \qquad \text{(I)},$$

wherein Co(RPP) is the comonomer content of the propylene copolymer (R-PP) in wt.-% and Co(RPP1) is the comonomer content of the first propylene copolymer fraction (R-PP1) in wt.-%.

**5.** The polypropylene composition according to any one of claims 1 to 4, wherein the polypropylene composition is a heterophasic propylene copolymer (HECO) comprising the propylene copolymer (R-PP) and an elastomeric copolymer (E), wherein said propylene copolymer (R-PP) comprises units derived from propylene, alpha-hexene and optionally ethylene and said elastomeric copolymer (E) is a terpolymer (T) comprising units derived from propylene, ethylene and alpha-hexene.

**6.** The polypropylene composition according to any one of claims 1 to 5, wherein the polypropylene composition comprises a xylene cold insoluble (XCI) fraction comprising comonomer units derived from

a) ethylene in an amount from 0 to 10 wt.-%, based on the total weight of the xylene cold insoluble (XCI) fraction, and
b) alpha-hexene in an amount from 1.0 to 12 wt.-%, based on the total weight of the xylene cold insoluble (XCI) fraction.

**7.** The polypropylene composition according to claim 5 or 6, wherein the polypropylene composition does not comprise a further polymeric material different to the elastomeric copolymer (E) and the propylene copolymer (R-PP) in an amount exceeding 5.0 wt.-%, preferably exceeding 2.5 wt.-%, based on the total weight of the polypropylene composition.

**8.** The polypropylene composition according to any one of claims 1 to 7, wherein the polypropylene composition is prepared in the presence of a metallocene catalyst.

**9.** The polypropylene composition according to any one of claims 1 to 8, wherein the polypropylene composition has been produced in a multi-stage process.

**10.** The polypropylene composition according to any one of claims 1 to 9, wherein the polypropylene composition, when measured on a 50 μm cast film, has

a) a clarity before and/or after sterilization as measured according to ASTM D1003-00 in the range from 95.0 to 100.0 %, preferably from 97.0 to 100.0 %, and/or
b) a haze before sterilization as measured according to ASTM D1003-00 in the range from 0.01 to 1.0 %, preferably in the range from 0.01 to 0.8 %, and/or
c) a haze after sterilization as measured according to ASTM D1003-00 in the range from 0.01 to 10.0 %, preferably in the range from 0.01 to 8.0 %, and/or
d) a tensile modulus in machine direction and/or transverse direction as measured according to ISO 527-3 at 23°C in the range from 200 to 600 MPa, preferably from 300 to 500 MPa.

**11.** A process for the preparation of a polypropylene composition according to any one of the preceding claims, wherein a propylene copolymer (R-PP) is prepared in a first stage and optionally second stage and an elastomeric copolymer (E) is prepared in a further stage in the presence of the propylene copolymer (R-PP).

**12.** A film comprising the polypropylene composition of claims 1 to 10, having, when measured on a 50 μm cast film,

a) a clarity before and/or after sterilization as measured according to ASTM D1003-00 in the range from 95.0 to 100.0 %, preferably from 97.0 to 100.0 %, and/or
b) a haze before sterilization as measured according to ASTM D1003-00 in the range from 0.01 to 1.0 %,

preferably in the range from 0.01 to 0.8 %, and/or
c) a haze after sterilization as measured according to ASTM D1003-00 in the range from 0.01 to 10.0 %, preferably in the range from 0.01 to 8.0 %, and/or
d) a tensile modulus in machine direction and/or transverse direction as measured according to ISO 527-3 at 23°C in the range from 200 to 600 MPa, preferably from 300 to 500 MPa.

**13.** The film according to claim 12 prepared from the polypropylene composition according to any one of the claims 1 to 10.

**14.** Film according to claim 12 or 13, wherein the film is a multilayer film and at least one layer comprises the polypropylene composition.

**15.** Film according to any one of claims 12 to 14, wherein the film is a multilayer film having at least three layers ABC, wherein the B layer comprises the polypropylene composition.

**Patentansprüche**

**1.** Polypropylen-Zusammensetzung mit einer Schmelzefließrate $MFR_2$ (230°C / 2,16 kg), gemessen gemäß ISO 1133, im Bereich von 1,0 bis 6,0 g/10 min, und einer Schmelztemperatur Tm, gemessen durch dynamische Differenzkalorimetrie (DSC), im Bereich von 120 bis 145°C, wobei die Polypropylen-Zusammensetzung eine Menge einer in kaltem Xylol löslichen Fraktion (XCS), bestimmt gemäß ISO 16152 (25°C), im Bereich von 5 bis 30 Gew.-%, bezogen auf das Gesamtgewicht der Zusammensetzung, umfasst, wobei die in kaltem Xylol lösliche Fraktion (XCS) eine Grenzviskosität (IV), bestimmt gemäß DIN ISO 162/1 (in Decalin bei 135°C), im Bereich von 1,2 bis 3,0 dl/g aufweist und Comonomer-Einheiten umfasst, die abgeleitet sind von

i) Ethylen in einer Menge von 4,0 bis 50 Gew.-%, bezogen auf das Gesamtgewicht der in kaltem Xylol löslichen Fraktion (XCS), und
ii) alpha-Hexen in einer Menge von 0,5 bis 10 Gew.-%, bezogen auf das Gesamtgewicht der in kaltem Xylol löslichen Fraktion (XCS).

**2.** Polypropylen-Zusammensetzung nach Anspruch 1, wobei die Polypropylen-Zusammensetzung ein Propylen-Copolymer (R-PP) in einer Menge von 70 bis 95 Gew.-%, bezogen auf das Gesamtgewicht der Zusammensetzung, umfasst.

**3.** Polypropylen-Zusammensetzung nach Anspruch 2, wobei das Propylen-Copolymer (R-PP) eine Schmelzefließrate $MFR_2$ (230°C / 2,16 kg), gemessen gemäß ISO 1133, im Bereich von 1,0 bis 15 g/10 min aufweist.

**4.** Polypropylen-Zusammensetzung nach einem der Ansprüche 1 bis 3, wobei das Propylen-Copolymer (R-PP) eine erste Propylen-Copolymer-Fraktion (R-PP1) und eine zweite Propylen-Copolymer-Fraktion (R-PP2) umfasst und die Comonomer-Gehalte des Propylen-Copolymers (R-PP) und der ersten Propylen-Copolymer-Fraktion (R-PP1) die Gleichung (I) erfüllen,

$$\frac{Co(RPP)}{Co(RPP1)} \geq 2{,}0 \qquad (I),$$

wobei Co(RPP) der Comonomer-Gehalt des Propylen-Copolymers (R-PP) in Gew.-% ist und Co(RPP1) der Comonomer-Gehalt der ersten Propylen-Copolymer-Fraktion (R-PP1) in Gew.-% ist.

**5.** Polypropylen-Zusammensetzung nach einem der Ansprüche 1 bis 4, wobei die Polypropylen-Zusammensetzung ein heterophasisches Propylen-Copolymer (HECO) ist, umfassend das Propylen-Copolymer (R-PP) und ein elastomeres Copolymer (E), wobei das Propylen-Copolymer (R-PP) Einheiten umfasst, die von Propylen, alpha-Hexen und gegebenenfalls Ethylen abgeleitet sind, und das elastomere Copolymer (E) ein Terpolymer (T) ist, umfassend Einheiten, die von Propylen, Ethylen und alpha-Hexen abgeleitet sind.

**6.** Polypropylen-Zusammensetzung nach einem der Ansprüche 1 bis 5, wobei die Polypropylen-Zusammensetzung eine in kaltem Xylol unlösliche Fraktion (XCI) umfasst, umfassend die Comonomer-Einheiten, die abgeleitet sind von

a) Ethylen in einer Menge von 0 bis 10 Gew.-%, bezogen auf das Gesamtgewicht der in kaltem Xylol unlöslichen Fraktion (XCI), und
b) alpha-Hexen in einer Menge von 1,0 bis 12 Gew.-%, bezogen auf das Gesamtgewicht der in kaltem Xylol unlöslichen Fraktion (XCI).

**7.** Polypropylen-Zusammensetzung nach Anspruch 5 oder 6, wobei die Polypropylen-Zusammensetzung kein weiteres polymeres Material, das sich von dem elastomeren Copolymer (E) und dem Propylen-Copolymer (R-PP) unterscheidet, in einer Menge von mehr als 5,0 Gew.-%, vorzugsweise mehr als 2,5 Gew.-%, bezogen auf das Gesamtgewicht der Polypropylen-Zusammensetzung, umfasst.

**8.** Polypropylen-Zusammensetzung nach einem der Ansprüche 1 bis 7, wobei die Polypropylen-Zusammensetzung in Gegenwart eines Metallocenkatalysators hergestellt wird.

**9.** Polypropylen-Zusammensetzung nach einem der Ansprüche 1 bis 8, wobei die Polypropylen-Zusammensetzung in einem mehrstufigen Verfahren hergestellt worden ist.

**10.** Polypropylen-Zusammensetzung nach einem der Ansprüche 1 bis 9, wobei die Polypropylen-Zusammensetzung, gemessen an einer 50 $\mu$m Gießfolie, aufweist

a) eine Klarheit vor und/oder nach der Sterilisation, gemessen gemäß ASTM D1003-00, im Bereich von 95,0 bis 100,0 %, vorzugsweise von 97,0 bis 100,0 %, und/oder
b) eine Trübung vor der Sterilisation, gemessen gemäß ASTM D1003-00, im Bereich von 0,01 bis 1,0 %, vorzugsweise im Bereich von 0,01 bis 0,8 %, und/oder
c) eine Trübung nach der Sterilisation, gemessen gemäß ASTM D1003-00, im Bereich von 0,01 bis 10,0 %, vorzugsweise im Bereich von 0,01 bis 8,0 %, und/oder
d) einen Zugmodul in Maschinenrichtung und/oder Querrichtung, gemessen gemäß ISO 527-3 bei 23°C, im Bereich von 200 bis 600 MPa, vorzugsweise von 300 bis 500 MPa.

**11.** Verfahren zur Herstellung einer Polypropylen-Zusammensetzung nach einem der vorangehenden Ansprüche, wobei in einer ersten Stufe und gegebenenfalls zweiten Stufe ein Propylen-Copolymer (R-PP) hergestellt wird und in einer weiteren Stufe ein elastomeres Copolymer (E) in Gegenwart des Propylen-Copolymers (R-PP) hergestellt wird.

**12.** Folie, umfassend die Polypropylen-Zusammensetzung nach Ansprüchen 1 bis 10, die, gemessen an einer 50 $\mu$m Gießfolie, aufweist

a) eine Klarheit vor und/oder nach der Sterilisation, gemessen gemäß ASTM D1003-00, im Bereich von 95,0 bis 100,0 %, vorzugsweise von 97,0 bis 100,0 %, und/oder
b) eine Trübung vor der Sterilisation, gemessen gemäß ASTM D1003-00, im Bereich von 0,01 bis 1,0 %, vorzugsweise im Bereich von 0,01 bis 0,8 %, und/oder
c) eine Trübung nach der Sterilisation, gemessen gemäß ASTM D1003-00, im Bereich von 0,01 bis 10,0 %, vorzugsweise im Bereich von 0,01 bis 8,0 %, und/oder
d) einen Zugmodul in Maschinenrichtung und/oder Querrichtung, gemessen gemäß ISO 527-3 bei 23°C, im Bereich von 200 bis 600 MPa, vorzugsweise von 300 bis 500 MPa.

**13.** Folie nach Anspruch 12, hergestellt aus der Polypropylen-Zusammensetzung nach einem der Ansprüche 1 bis 10.

**14.** Folie nach Anspruch 12 oder 13, wobei die Folie eine Mehrschichtfolie ist und mindestens eine Schicht die Polypropylen-Zusammensetzung umfasst.

**15.** Folie nach einem der Ansprüche 12 bis 14, wobei die Folie eine Mehrschichtfolie mit mindestens drei Schichten ABC ist, wobei die Schicht B die Polypropylen-Zusammensetzung umfasst.

## Revendications

**1.** Composition de polypropylène ayant un indice de fluage $MFR_2$ (230°C/2,16 kg), mesuré conformément à la norme ISO 1133, dans la plage de 1,0 à 6,0 g/10 min, et un point de fusion Tm, mesuré par calorimétrie à balayage différentiel (DSC), dans la plage de 120 à 145°C, la composition de polypropylène comprenant une quantité de

fraction soluble à froid dans le xylène (XCS), déterminée conformément à la norme ISO 16152 (25°C), dans la plage de 5 à 30 % en poids basés sur le poids total de la composition, la fraction soluble à froid dans le xylène (XCS) ayant une viscosité intrinsèque (IV), déterminée conformément à la norme DIN ISO 162/1 (dans la décaline à 135°C), dans la plage de 1,2 à 3,0 dl/g et comprenant des motifs comonomères dérivés

i) d'éthylène en une quantité de 4,0 à 50 % en poids basés sur le poids total de la fraction soluble à froid dans le xylène (XCS), et
ii) d'alpha-hexène en une quantité de 0,5 à 10 % en poids basés sur le poids total de la fraction soluble à froid dans le xylène (XCS).

**2.** Composition de polypropylène selon la revendication 1, dans laquelle la composition de polypropylène comprend un copolymère de propylène (R-PP) en une quantité de 70 à 95 % en poids basés sur le poids total de la composition.

**3.** Composition de polypropylène selon la revendication 2, dans laquelle le copolymère de propylène (R-PP) a un indice de fluage $MFR_2$ (230°C/2,16 kg), mesuré conformément à la norme ISO 1133, dans la plage de 1,0 à 15 g/10 min.

**4.** Composition de polypropylène selon l'une quelconque des revendications 1 à 3, dans laquelle le copolymère de propylène (R-PP) comprend une première fraction de copolymère de propylène (R-PP1) et une deuxième fraction de copolymère de propylène (R-PP2) et les teneurs en comonomères du copolymère de propylène (R-PP) et de la première fraction de copolymère de propylène (R-PP1) satisfont à l'inégalité (I),

$$\frac{Co(RPP)}{Co(RPP1)} \geq 2,0 \qquad (I),$$

dans laquelle Co(RPP) est la teneur en comonomères du copolymère de propylène (R-PP) en % en poids et Co(RPP1) est la teneur en comonomères de la première fraction de copolymère de propylène (R-PP1) en % en poids.

**5.** Composition de polypropylène selon l'une quelconque des revendications 1 à 4, dans laquelle la composition de polypropylène est un copolymère de propylène hétérophasique (HECO) comprenant le copolymère de propylène (R-PP) et un copolymère élastomère (E), dans laquelle ledit copolymère de propylène (R-PP) comprend des motifs dérivés de propylène, d'alpha-hexène et optionnellement d'éthylène et ledit copolymère élastomère (E) est un terpolymère (T) comprenant des motifs dérivés de propylène, d'éthylène et d'alpha-hexène.

**6.** Composition de polypropylène selon l'une quelconque des revendications 1 à 5, dans laquelle la composition de polypropylène comprend une fraction insoluble à froid dans le xylène (XCI) comprenant des motifs comonomères dérivés

a) d'éthylène en une quantité de 0 à 10 % en poids basés sur le poids total de la fraction insoluble à froid dans le xylène (XCI), et
b) d'alpha-hexène en une quantité de 1,0 à 12 % en poids basés sur le poids total de la fraction insoluble à froid dans le xylène (XCI).

**7.** Composition de polypropylène selon la revendication 5 ou 6, dans laquelle la composition de polypropylène ne comprend pas d'autre matériau polymère différent du copolymère élastomère (E) et du copolymère de propylène (R-PP) en une quantité dépassant 5,0 % en poids, de préférence dépassant 2,5 % en poids basés sur le poids total de la composition de polypropylène.

**8.** Composition de polypropylène selon l'une quelconque des revendications 1 à 7, dans laquelle la composition de polypropylène est préparée en présence d'un catalyseur métallocène.

**9.** Composition de polypropylène selon l'une quelconque des revendications 1 à 8, dans laquelle la composition de polypropylène a été produite dans un procédé à étapes multiples.

**10.** Composition de polypropylène selon l'une quelconque des revendications 1 à 9, dans laquelle la composition de

polypropylène, lors d'une mesure sur un film coulé de 50 pm, a

a) une clarté avant et/ou après stérilisation, telle que mesurée conformément à la norme ASTM D1003-00, dans la plage de 95,0 à 100,0 %, de préférence de 97,0 à 100,0 %, et/ou
b) un voile avant stérilisation, tel que mesuré conformément à la norme ASTM D1003-00, dans la plage de 0,01 à 1,0 % en poids, de préférence dans la plage de 0,01 à 0,8 %, et/ou
c) un voile après stérilisation, tel que mesuré conformément à la norme ASTM D1003-00, dans la plage de 0,01 à 10,0 %, de préférence dans la plage de 0,01 à 8,0 %, et/ou
d) un module de traction dans le sens machine et/ou dans le sens transversal, tel que mesuré conformément à la norme ISO 527-3 à 23°C, dans la plage de 200 à 600 MPa, de préférence de 300 à 500 MPa.

**11.** Procédé pour la préparation d'une composition de polypropylène selon l'une quelconque des revendications précédentes, dans lequel un copolymère de propylène (R-PP) est préparé dans une première étape et optionnellement une deuxième étape et un copolymère élastomère (E) est préparé dans une étape ultérieure en présence du copolymère de propylène (R-PP).

**12.** Film comprenant la composition de polypropylène selon les revendications 1 à 10 ayant, lors d'une mesure sur un film coulé de 50 μm,

a) une clarté avant et/ou après stérilisation, telle que mesurée conformément à la norme ASTM D1003-00, dans la plage de 95,0 à 100,0 %, de préférence de 97,0 à 100,0 %, et/ou
b) un voile avant stérilisation, tel que mesuré conformément à la norme ASTM D1003-00, dans la plage de 0,01 à 1,0 % en poids, de préférence dans la plage de 0,01 à 0,8 %, et/ou
c) un voile après stérilisation, tel que mesuré conformément à la norme ASTM D1003-00, dans la plage de 0,01 à 10,0 %, de préférence dans la plage de 0,01 à 8,0 %, et/ou
d) un module de traction dans le sens machine et/ou dans le sens transversal, tel que mesuré conformément à la norme ISO 527-3 à 23°C, dans la plage de 200 à 600 MPa, de préférence de 300 à 500 MPa.

**13.** Film selon la revendication 12, préparé à partir de la composition de polypropylène selon l'une quelconque des revendications 1 à 10.

**14.** Film selon la revendication 12 ou 13, dans lequel le film est un film multicouche et au moins une couche comprend la composition de polypropylène.

**15.** Film selon l'une quelconque des revendications 12 à 14, dans lequel le film est un film multicouche ayant au moins trois couches ABC, dans lequel la couche B comprend la composition de polypropylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3064548 A1
- WO 2015022127 A1
- EP 2664650 A1
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 2015011135 A1
- EP 0887379 A
- WO 9212182 A
- WO 2004000899 A
- WO 2004111095 A
- WO 9924478 A
- WO 9924479 A
- WO 0068315 A
- WO 2013007650 A1